# EUROPEAN PATENT SPECIFICATION

(11) **EP 1 403 696 B1**
(45) Date of publication and mention of the grant of the patent: **18.04.2007**
(21) Application number: 03255671.4
(22) Date of filing: 11.09.2003
(51) Int. Cl.: G03B 21/62, G02B 6/08

(54) **Rear projection screen using a light-guide faceplate and diffusing means**
Rückprojektionsschirm mit Lichtleitfrontplatte und Streuelement
Ecran de rétroprojection utilisant une plaque frontale de guidage de lumière et des moyens diffusants

(30) Priority: 24.09.2002 JP 2002277958
(43) Date of publication of application: 31.03.2004
(60) Divisional application: 06076489.1
(73) Proprietor: SEIKO EPSON CORPORATION, Shinjuku-ku Tokyo 163-0811 (JP)
(72) Inventor: Sakaguchi, Masafumi c/o Seiko Epson Corporation, Suwa-shi Nagano-ken 392-8502 (JP)
(74) Representative: Sturt, Clifford Mark

(56) References cited:
- EP-A- 0 294 122
- EP-A- 0 357 070
- WO-A-02/06865
- WO-A-99/13642
- US-A- 4 743 090
- US-A- 5 439 621
- US-A- 5 626 410
- US-B1- 6 317 263
- PATENT ABSTRACTS OF JAPAN vol. 1996, no. 12, 26 December 1996 (1996-12-26) -& JP 08 220519 A (MATSUSHITA ELECTRIC IND CO LTD), 30 August 1996 (1996-08-30)
- PATENT ABSTRACTS OF JAPAN vol. 011, no. 091 (P-558), 23 March 1987 (1987-03-23) -& JP 61 241741 A (HITACHI LTD), 28 October 1986 (1986-10-28)
- PATENT ABSTRACTS OF JAPAN vol. 1997, no. 02, 28 February 1997 (1997-02-28) -& JP 08 254757 A (HITACHI LTD), 1 October 1996 (1996-10-01)

## Description

The present invention relates to transmissive screens and rear projectors.

The demand for rear projectors as suitable displays for home theater monitors and large-screen television sets is now growing.

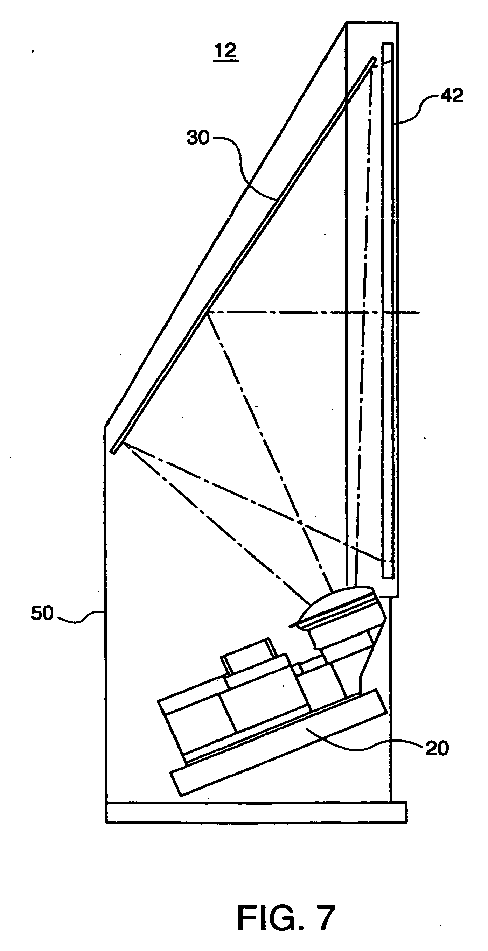

Fig. 7 illustrates an optical system of a rear projector. Referring to Fig. 7, a rear projector 12 has a housing 50 accommodating an optical projection unit 20 that projects an image; a light-guide mirror 30 that guides the image light projected from the optical projection unit 20; and a transmissive screen 42 on which the image light guided by the light-guide mirror 30 is projected.

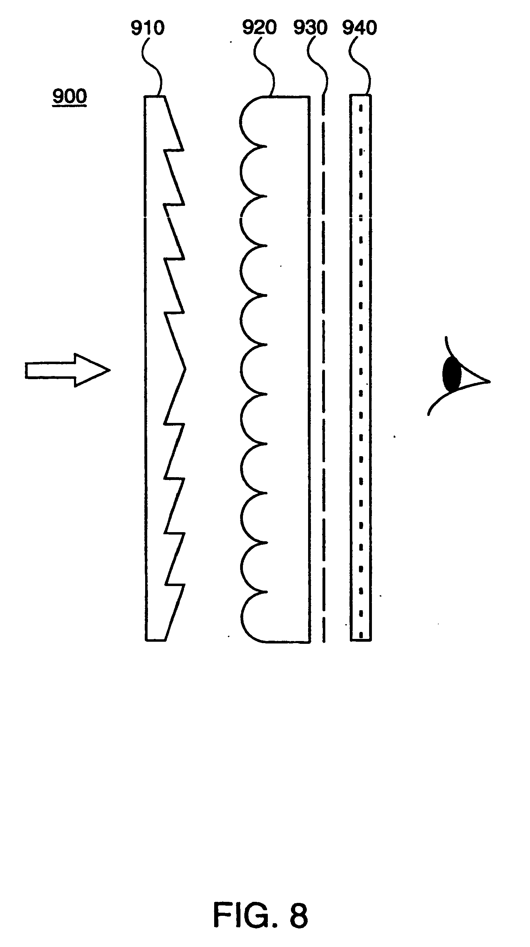

The transmissive screen 42 applied to this type of rear projector 12 is particularly required to have a wide viewing angle. Patent Document 1 discloses a transmissive screen with such a wide viewing angle. Fig. 8 is a sectional view of a transmissive screen of this type. Referring to Fig. 8, a transmissive screen 900 includes a Fresnel lens portion 910 whose light-exiting face has Fresnel lens components; a microlens array portion 920 whose light-incident face with many microlenses is disposed at the light-exiting face side of the Fresnel lens portion 910; a light shield portion 930 disposed at the light-exiting face side of the microlens array portion 920; and a diffusing sheet 940 disposed at the light-exiting face side of the light shield portion 930. (See Patent Document 1.)

Patent Document 1: Japanese Unexamined Patent Application Publication No. 2000-131506

The transmissive screen 900 has an advantage that a large vertical viewing angle due to the light refraction effect of the microlenses can be obtained.

However, the transmissive screen 900 has a problem that light diffraction easily occurs. The transmissive screen 900 also has a problem that moire-fringing easily occurs.

European patent application no. 0294122, published on 7th December 1988, discloses a display system comprising a light-transmitting screen for projecting an enlarged image of, for example, a picture tube. The screen consists of a polymer layer in which there is formed an array of GRIN microlenses. Also described is a non-profiled dot screen in the form of a simulated glass-fibre screen in contact with a profiled GRIN screen. These elements act to remove "hot spots", namely particularly bright regions of the image, in the centre of each microlens. The GRIN screen is disposed on the light-exiting face of the glass-fibre screen.

International patent application WO 9913642, published on 18th March 1999, relates to a rear-projection system, in particular a screen for the projection of an image. The screen comprises a rear-facing surface, which is in contact with a matrix of transparent optical microelement cores. This matrix is, in turn, in contact with a front surface of the screen. Between the matrix and the front surface are disposed a series of vertical optical elements for the improvement of horizontal viewing.

US 4,743,090, issued on 10th May 1988, describes in one embodiment a screen assembly for the rear-view projection of an image. A second embodiment concerns a screen for the front-viewing of an image. A light-guide plate consisting of a series of optical fibres is provided, but no light-exit-angle distribution uniformizing means in the form of a series of microlenses or a diffusing layer is provided.

In US 5,626,410, issued on 6th May 1997, a rear projection screen is disclosed, which allows a uniform perceived brightness over a large viewing angle. The screen in one embodiment comprises an input diffusing screen, a fibre optic array and an output diffusing screen in that order. In a second embodiment, the output diffusing screen is dispensed with.

WO 02/006865, published on 24th January 2002, discloses a method of forming a solid or honeycombed optical channel plate. In one embodiment, a transmissive optical fibre channel plate comprises a rear projection screen for scattering the incident light. The scattered light is then picked up by optical waveguides and is output therefrom. Alternatively, the scattering projection screen is omitted. The light guides of the optical channel plate may be formed by drilling an array of cylindrical bores in a block. The block may be composed of an optically reflective material, so that it is then opaque.

Japanese patent application 08220519, published on 30th August 1996, discloses a diffusion screen consisting of an optically opaque material, in which are disposed an array of light-guide parts.

Japanese patent application 61241741, published on 28th October 1986, discloses the use of a changing shape profile of an array of lenticular lenses making up a screen, in the interest of achieving a uniform luminance distribution over the entire surface of the screen.

In JP 08254757, published on 1st October 1996, a uniform luminance distribution on the plane of a whole screen is achieved by the use of an array of lenticular lenses having different radii of curvature, the radii increasing toward the edges of the screen.

US patent 5,439,621, issued on 8th August 1995, describes a method for making a microlens array, in which there is a varying focal-length distribution of the lenses over the area of the array. The distribution appears to be such that the radii of curvature of the lenses at the periphery are larger than at the centre.

EP 0357070, published on 7th March 1990, discloses a radiused fiber optic faceplate, which is particularly suited for use in optical apparatus comprising a high-gain diffusion screen or a direct-view CRT. The respective optical axes of the fibres are substantially oriented so that the refracted information-bearing light passed through each fibre is directed to the exit pupil and ambient light from outside the exit pupil is absorbed in the faceplate, which is therefore opaque. Hence the faceplate substantially increases contrast.

An object of the present invention is to provide a transmissive screen that unlikely causes light diffraction and moire-fringing, and also to provide a rear projector with such a high-quality transmissive screen.

In a first aspect of the present invention, there is provided a transmissive screen for a rear projector, the transmissive screen comprising a light-guide plate having substantially cylindrical light-guide spaces arranged in a flat substrate; and light-exit-angle distribution uniformizing means for making the angular distribution of the light exiting from the substantially cylindrical light-guide spaces of the light-guide plate uniform over the transmissive screen, the light-exit-angle distribution uniformizing means being disposed at the light-exiting face side of the light-guide plate, characterized in that: the light-exit-angle distribution uniformizing means comprises a microlens array having microlenses, each microlens being provided correspondingly to each of the substantially cylindrical light-guide spaces of the light-guide plate, a material composing the microlenses in a substantially central region of the transmissive screen having a greater refractive index than at least a second material composing the microlenses in a peripheral region of the transmissive screen.

In a rear projector, among light emerging from a light-guide mirror, light entering the peripheral region of the transmissive screen has a larger incident angle than light entering the central region of the transmissive screen. For this reason, the angular distribution of light exiting from the substantially cylindrical light-guide spaces in the central region of the transmissive screen is significantly different from that of light exiting from the substantially cylindrical light-guide spaces in the peripheral region of the transmissive screen. Because the refractive index of the material of the microlens is greater in the substantially central region of the transmissive screen than in the peripheral region, the disposition of the microlens array at the light-exiting face side of the light-guide plate also effectively makes the light-exit-angle distribution uniform over the central and peripheral regions of the transmissive screen. This achieves a rear projector with a desired wide viewing angle.

The light-guide plate of the present invention may include a light-guide plate having plural optical fibers arranged in a flat substrate, a light-guide plate having plural light-guide tubes arranged in a flat substrate, or a light-guide plate having plural holes in a flat substrate for forming substantially cylindrical light-guide spaces.

In the transmissive screen set forth above, the diameter of the light-guide spaces is preferably in the range of 1 µm to 150 µm.

The reason for setting the diameter of the optical fibers at 1 µm or larger is to facilitate the arrangement of the plural light-guide spaces in the manufacturing process of the light-guide plate. From this viewpoint, the light-guide spaces more preferably have a diameter of 10 µm or more, and most preferably have a diameter of 20 µm or more. On the other hand, the diameter of the light-guide spaces is set to 150 µm or less so as to maintain a required resolution, since a decrease in resolution is caused by the excessively large diameter of the light-guide spaces compared to the size of pixels projected on the light-guide plate. From this viewpoint, the light-guide spaces more preferably have a diameter of 100 µm or less, and most preferably have a diameter of 60 µm or less.

The length of the light-guide spaces is preferably equal to or greater than the diameter of the light-guide spaces, and is also preferably 10 mm or less.

The length of the light-guide spaces is preferably set to be equal to or greater than the diameter of the light-guide spaces so as to sufficiently decrease the regularity of, for example, the angle or the phase of light entering the light-guide plate as the light passes through the light-guide spaces. From this viewpoint, the length of the light-guide spaces is more preferably at least three times the diameter of the light-guide spaces, and most preferably at least ten times the diameter of the light-guide spaces. On the other hand, the length of the light-guide spaces may be set to 10 mm or less so as not to attenuate light passing through the substantially cylindrical light-guide spaces, thus preventing the screen from dimming, and also so as to sufficiently reduce the cost of manufacture. From this viewpoint, the substantially cylindrical light-guide spaces more preferably have a length of 6 mm or less, and most preferably have a length of 4 mm or less.

The flat substrate is preferably formed of an opaque material.

Accordingly, when light is projected from the projecting lens onto the light-guide spaces, the opaque material absorbs light that does not enter the light-guide plate or that is not introduced into the light-guide spaces so as to suppress stray light and thus to suppress deterioration of contrast and picture quality of the screen due to the stray light. Furthermore, the opaque material absorbs external light and environmental light to contribute to a screen with a high contrast even in a brightly lit room.

The microlens array is preferably disposed on the light-exiting face of the light-guide plate.

Thus, the light-guide plate and the microlens array are integrated to prevent loss by interfacial reflection, which occurs in a conventional transmissive screen between the light-exiting face of the Fresnel lens portion and the light-incident face of the microlens array. A brighter transmissive screen than the conventional one can thus be achieved.

The light-guide plate may include a light diffusing layer disposed on its light-exiting face side, and the microlens array is preferably disposed on the light-exiting face of the light diffusing layer.

When a light diffusing layer is disposed between the light-guide plate and me microlens array, light propagating through the light-guide plate is diffused by the light diffusing layer before entering the microlens array. Although light enters the central region of the light-guide plate at a narrower angle with respect to the normal line of the plate compared with light entering the peripheral region of the light-guide plate, the light diffusing layer effectively diffuses light to enhance the uniformity of the luminance in the screen.

In a second aspect, the invention provides a rear projector including an optical projection unit, a light-guide mirror, and a transmissive screen as described above.

Accordingly, the rear projector of the present invention having a transmissive screen that does not easily cause light diffraction and moire-fringing can display high-quality images without light diffraction and moire-fringing.

Embodiments of the present invention will now be described by way of further example only and with reference to the accompanying drawings, in which:
Fig. 1 illustrates an exemplary optical system of a transmissive screen.
Fig. 2 is a perspective view of substantially cylindrical light-guide spaces composing a part of the transmissive screen shown in Fig. 1
Fig. 3 illustrates a further exemplary optical system of a transmissive screen.
Fig. 4 illustrates an optical system of a transmissive screen of a first embodiment according to the present invention.
Fig. 5 illustrates a yet further examplary optical system of a transmissive screen.
Fig. 6 illustrates an optical system of a rear projector of a second embodiment according to the present invention.
Fig. 7 illustrates an optical system of a conventional rear projector.
Fig. 8 is a sectional view of the structure of the conventional transmissive screen.

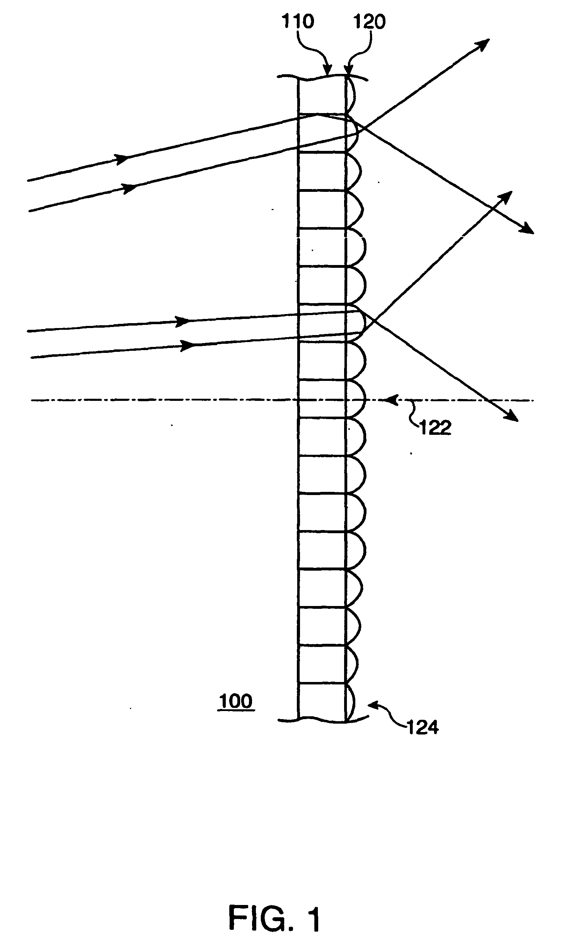

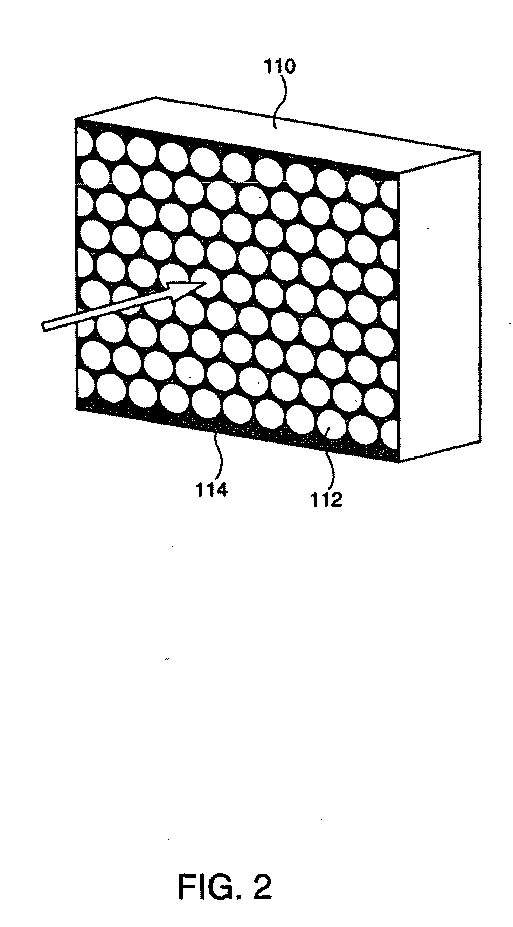

A transmissive screen, which is included purely as an example and does not form part of the present invention, is applied to rear projectors. Fig. 1 illustrates an optical system of the transmissive screen according to this example. Fig. 2 is a perspective view of a light-guide plate, which is a component of the transmissive screen according to the example. Referring to Figs. 1 and 2, the transmissive screen 100 includes a light-guide plate 110 having plural optical fibers 112 which function as substantially cylindrical light-guide spaces; and a microlens array 120 disposed at the light-exiting face side of the light-guide plate 110, the microlens array 120 functioning as light-exit-angle distribution uniformizing means for making the angular distribution of light exiting from the light-guide plate 110 uniform over the entire screen.

The microlens array 120 includes plural microlenses each of which corresponds to each of the optical fibers 112 in the light-guide plate 110. The curvature radius of the microlenses gradually increase from the central region of the transmissive screen 100 to the peripheral region of the transmissive screen 100. In other words, a microlens 122 in the central region of the screen 100 has a smaller curvature radius than at least a microlens 124 in the peripheral region of the screen 100.

Accordingly, the angular distribution of exiting light effectively becomes uniform over the central and the peripheral regions of the transmissive screen 100 by disposing the microlens array 120 at the light-exiting face side of the light-guide plate 110. Thus, a rear projector with a desired wide viewing angle is achieved.

In the transmissive screen 100 of the example, the light-guide plate 110 is used in place of a Fresnel lens portion 910 in a conventional transmissive screen 900. Because regularity of, for example, the angle or the phase of light entering the light-guide plate 110 decreases as the light propagates through each optical fiber 112, light diffraction can be effectively suppressed even if there exists a regular pattern, such as the microlens array, at the light-exiting face side of the light-guide plate.

In the transmissive screen 100 of the example, the phase of the light entering the light-guide plate 110 becomes random as the light propagates through each optical fiber. This advantageously decreases the scintillation to efficiently suppress deterioration of contrast and picture quality caused by the scintillation. Furthermore, because the Fresnel lens is not necessary, the deterioration of contrast and picture quality due to ghost images caused by internal reflection in the Fresnel lens can be also advantageously suppressed.

In the transmissive screen 100, the diameter of the optical fibers 112 is set at 80 µm. This achieves a satisfactory resolution for the transmissive screen and also simplifies the manufacturing process of the transmissive screen.

In the transmissive screen 100, the length of the optical fibers 112 is set at 2 mm. In other words, the thickness of the light-guide plate 110 is 2 mm. This satisfactorily lowers the regularity of, for example, the angle or the phase of light entering the light-guide plate 110 as the light propagates through the optical fibers 112, thereby effectively suppressing light diffraction.

In the transmissive screen 100, the light-guide plate 110 includes opaque material 114 filled in spaces between adjacent optical fibers 112. When light is projected from a projecting lens onto the light-guide plate 110, the opaque material 114 absorbs light that does not enter the light-guide spaces or that is not introduced into the light-guide spaces so as to suppress stray light and deterioration of contrast and picture quality of the screen caused by the stray light.

In the transmissive screen 100 of the example, the light-guide plate 110 and the microlens array 120 are integrated to prevent loss by interfacial reflection, which occurs in a conventional transmissive screen between the light-exiting face of the Fresnel lens and the light-incident face of the microlens array. A brighter transmissive screen than the conventional one can thus be achieved.

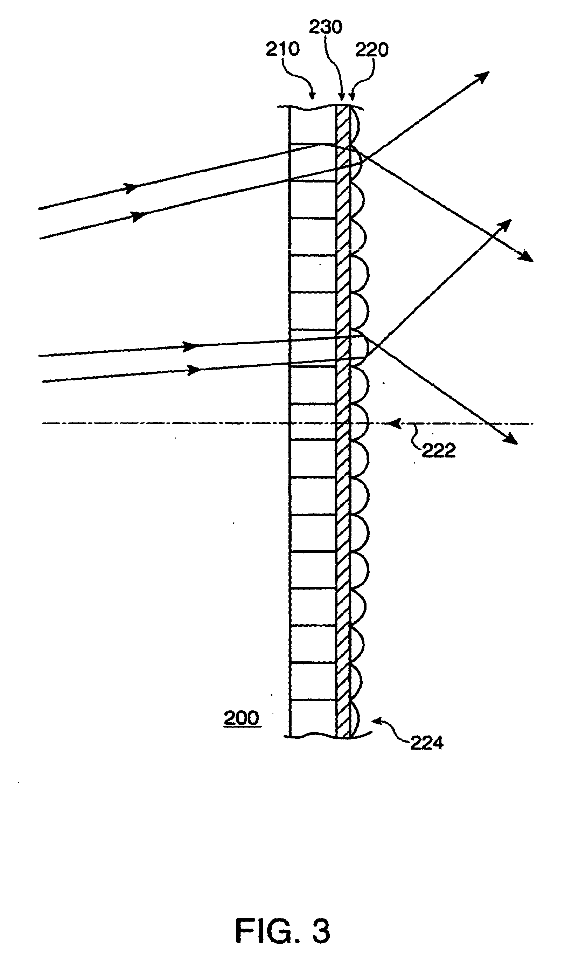

Fig. 3 illustrates an optical system of a transmissive screen included as a second example, and which likewise does not form part of the present invention. Referring to Fig. 3, a transmissive screen 200 of the second example differs from the transmissive screen 100 of the first example in having a light diffusing layer 230. In other words, the transmissive screen 100 of the first example has the microlens array 120 disposed on the light-exiting face of the light-guide plate 110, whereas the transmissive screen 200 of the second example has the light diffusing layer 230 disposed solely in the central region of the light-exiting face of a light-guide plate 210, and the microlens array 220 is also disposed over the light diffusing layer 230.

In the transmissive screen 200 of the second example, light propagating through the light-guide plate 210 is diffused by the light diffusing layer 230 before entering the microlens array 220. Thus, light entering the central region of the microlens array at a shallow angle is diffused to achieve a uniform brightness of the screen.

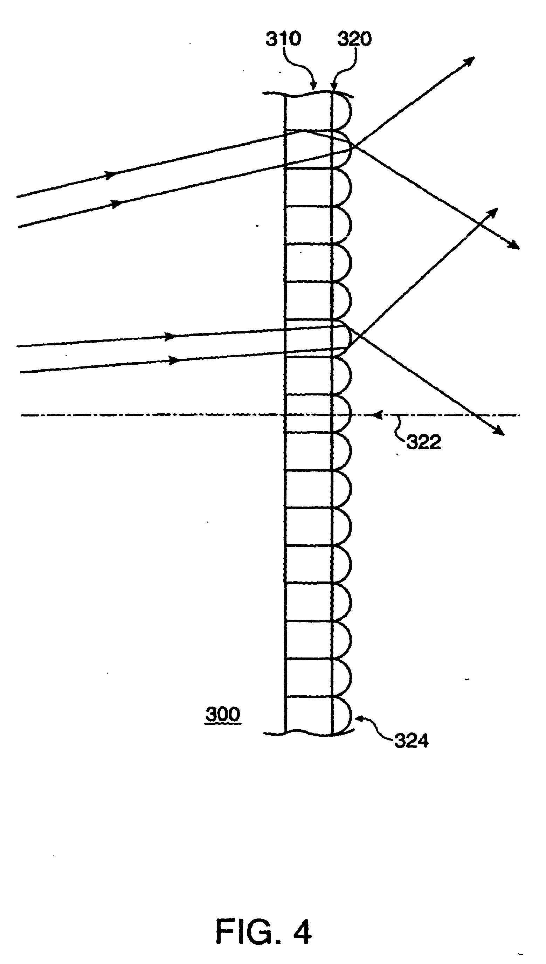

Fig. 4 illustrates an optical system of a transmissive screen according to a first embodiment of the present invention. Referring to Fig. 4, the transmissive screen of the first embodiment differs from the transmissive screen of the first example in the structure of the microlens array. In the transmissive screen 100 of the first example, the curvature radius of the microlenses in the microlens array gradually increase from the central region of the transmissive screen 100 to the peripheral region of the transmissive screen 100. In other words, a microlens in the central region of the screen has a smaller curvature radius than at least a microlens in the peripheral region of the screen. On the other hand, in the transmissive screen 300 of the first embodiment, a microlens array 320 has the same curvature for all microlenses, but is composed of materials with different refractive indices so that the refractive index of the materials gradually decreases from the central region of the transmissive screen to the peripheral region of the transmissive screen. In other words, the refractive index of material of the microlenses 322 in the central region of the transmissive screen is greater than the refractive index of material of the microlenses 324 in the peripheral region of the transmissive screen.

Thus, the microlens array 320 achieves a uniform angular distribution of light emerging from the light-guide plate over the screen, as in the microlens array 120. As a result, the light-exit-angle distribution over the central and peripheral regions of the transmissive screen 300 of the first embodiment effectively becomes uniform, as in the first example, to achieve a rear projector with a desired wide viewing angle.

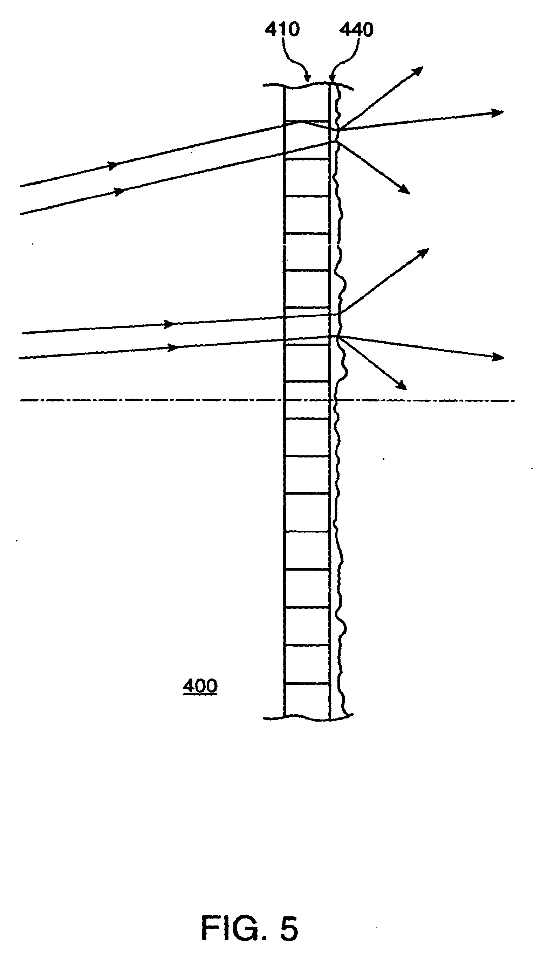

Fig. 5 illustrates an optical system of the transmissive screen according to a third example which does not form part of the present invention. Referring to Fig. 5, the transmissive screen 400 of the third example is provided with a light diffusing layer 440 in place of the microlens array 120 in the transmissive screen 100 according to the first example. In this light diffusing layer 440, the haze value gradually decreases from the central region of the screen to the peripheral region of the screen. In other words, the haze value of the light diffusing layer 440 in the substantially central region of the transmissive screen 400 is greater than at least the haze value in the peripheral region of the transmissive screen 400.

Thus, the light diffusing layer 440 also achieves a uniform angular distribution of light exiting from the light-guide plate over the screen, as in the microlens array 120. As a result, the light-exit-angle distribution in the central and peripheral regions of the transmissive screen 400 of the third example effectively becomes uniform, as in the transmissive screens 100, 200, and 300 of the respective first and second examples and first embodiment, thereby achieving a rear projector with a desired wide viewing angle.

In the transmissive screen 400 of the third example, the light diffusing layer 440 has a haze value of 60% in the central region of the screen and a haze value of 30% in the peripheral region of the screen.

In the transmissive screen 400 of the third example, the light diffusing layer 440 has a gloss value of 15% in the central region of the screen and a gloss value of 30% in the peripheral region of the screen.

The transmissive screen of the present invention was described above with reference to the transmissive screen 300 of the first embodiment. However, the transmissive screen of the present invention is not limited to this embodiment, and modifications are permissible within the scope of the present invention. For example, the transmissive screen may further include black-stripes or a light diffusing plate at the light-exiting face side of the microlens array 320.

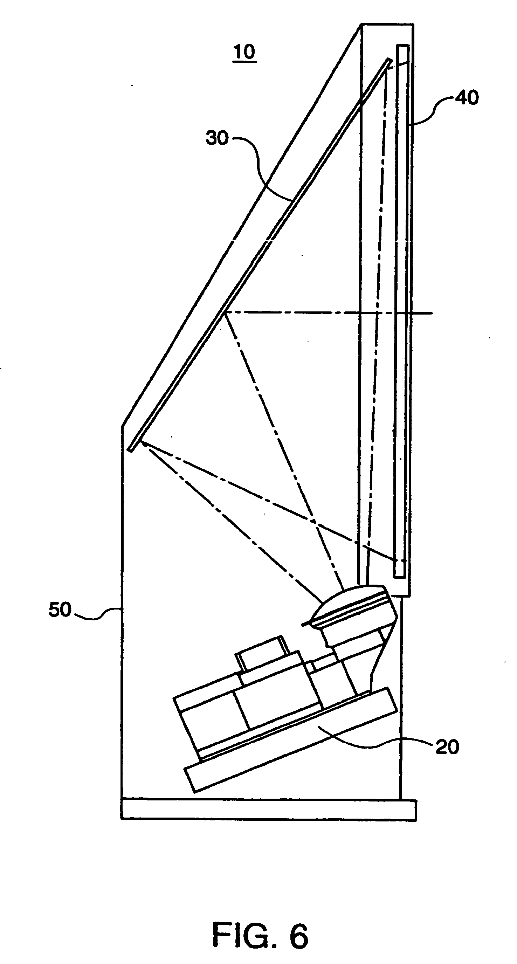

Fig. 6 illustrates a rear projector of a second embodiment according to the present invention. Referring to Fig. 6, a rear projector 10 of the second embodiment includes a housing 50 accommodating an optical projection unit 20; a light-guide mirror 30; and a transmissive screen 40.

In this rear projector 10, the transmissive screen 40 is the transmissive screen 300 of the first embodiment having low occurrence of light diffraction and moire-fringing. Thus, the rear projector does not cause light diffraction and moire-fringing and can display high-quality images.

In each of the above-mentioned embodiments, a light-guide plate having plural optical fibers arranged in a flat substrate is used. Alternatively, a light-guide plate having plural light-guide tubes arranged in a flat substrate may be used in place of the optical fibers. Another alternative is to use a light-guide plate having plural holes in a flat substrate to form substantially cylindrical light-guide spaces, thereby contributing to a lightweight structure as well as simplifying the manufacturing process.

## Claims

1. A transmissive screen for a rear projector, the transmissive screen comprising a light-guide plate (110; 310) having substantially cylindrical light-guide spaces (112) arranged in a flat substrate; and light-exit-angle distribution uniformizing means for making the angular distribution of the light exiting from the substantially cylindrical light-guide spaces of the light-guide plate uniform over the transmissive screen, the light-exit-angle distribution uniformizing means being disposed at the light-exiting face side of the light-guide plate,
**characterized in that**:
the light-exit-angle distribution uniformizing means comprises a microlens array (120; 320) having microlenses, each microlens being provided correspondingly to each of the substantially cylindrical light-guide spaces of the light-guide plate, a material composing the microlenses in a substantially central region of the transmissive screen having a greater refractive index than at least a second material composing the microlenses in a peripheral region of the transmissive screen.

2. The transmissive screen according to claim 1, wherein the light-guide spaces (112) have a diameter in the range of 1 µm to 150 µm.

3. The transmissive screen according to claim 1, wherein the light-guide spaces (112) have a length greater than the diameter of the light-guide spaces, and have a length of 10 mm or less.

4. The transmissive screen according to any one of the preceding claims, wherein the flat substrate comprises an opaque material.

5. The transmissive screen according to any one of the preceding claims, wherein the microlens array is disposed on the light-exiting face of the light-guide plate.

6. A rear projector comprising an optical projection unit (20), a light-guide mirror (30), and a transmissive screen (40) according to any one of the preceding claims.

## Patentansprüche

1. Transmissiver Schirm für einen Rückprojektor, wobei der transmissive Schirm eine Lichtleitplate (110; 310) mit im Wesentlichen zylindrischen Lichtleiträumen (112) umfasst, die in einem flachen Substrat angeordnet sind; und ein Lichtaustrittswinkelverteilungs-Uniformisierungsmittel, das die Winkelverteilung des Lichts, das aus den im Wesentlichen zylindrischen Lichtleiträumen der Lichtleitplatte austritt, über den tragbaren Schirm gleichförmig zu machen, wobei das Lichtaustrittswinkelverteilungsuniformisierungsmittel, an der Seite der Lichtaustrittsfläche der Lichtleitplatte angeordnet ist,
**dadurch gekennzeichnet, dass:**
das Lichtaustrittswinkelverteilungs-Uniformisierungsmittel eine Mikrolinsenanordnung (120; 320) mit Mikrolinsen umfasst, wobei jede Mikrolinse entsprechend jedem der im Wesentlichen zylindrischen Lichtleiträume der Lichtleitplatte bereitgestellt ist, wobei ein Material, das die Mikrolinsen in einem im Wesentlichen zentralen Bereich des transmissiven Schirms bildet, einen größeren Brechungsindex als mindestens ein zweites Material hat, das die Mikolinsen in einem peripheren Bereich des transmissiven Schirms bildet.

2. Transmissiver Schirm nach Anspruch 1, wobei die Lichtleiträume (112) einen Durchmesser im Bereich von 1 µm bis 150 µm haben.

3. Transmissiver Schirm nach Anspruch 1, wobei die Lichtleiträume (112) eine Länge haben, die größer als der Durchmesser der Lichtleiträume ist, und eine Länge von 10 mm oder weniger haben.

4. Transmissiver Schirm nach einem der vorangehenden Ansprüche, wobei das flache Substrat ein opakes Material umfasst.

5. Transmissiver Schirm nach einem der vorangehenden Ansprüche, wobei die Mikrolinsenanordnung an der Lichtaustrittsfläche der Lichtleitplatte angeordnet ist.

6. Rückprojektor, umfassend eine optische Projektionseinheit (20), einen Lichtleitspiegel (30) und einen transmissiven Schirm (40) nach einem der vorangehenden Ansprüche.

## Revendications

1. Ecran transmissif pour un rétroprojecteur, l'écran transmissif comprenant une plaque de guidage de lumière (110; 310) ayant des espaces de guidage de lumière(112) essentiellement cylindriques disposés sur un substrat plat ; et un moyen d'uniformisation de la répartition de l'angle de sortie de la lumière, pour réaliser une répartition angulaire de la lumière sortant des espaces de guidage de lumière essentiellement cylindriques de la plaque de guidage de lumière, de manière uniforme, sur l'écran transmissif, le moyen d'uniformisation de la répartition de l'angle de sortie de la lumière étant disposé du côté de la face de sortie de la lumière de la plaque de guidage de lumière,
**caractérisé en ce que** :
le moyen d'uniformisation de la répartition de l'angle de sortie de la lumière comprend un réseau de microlentilles (120 ; 320) ayant des microlentilles, chaque microlentille étant fournie de manière à correspondre à chacun des espaces de guidage de lumière essentiellement cylindriques de la plaque de guidage de lumière, une matière formant les microlentilles dans une zone essentiellement centrale de l'écran transmissif présentant un indice de réfraction supérieur à celui d'une deuxième matière formant les microlentilles dans une zone périphérique de l'écran transmissif.

2. Ecran transmissif selon la revendication 1, où les espaces de guidage de lumière (112) présentent un diamètre dans la plage de 1 µm à 150 µm.

3. Ecran transmissif selon la revendication 1, où les espaces du guidage de lumière (112) présentent une longueur supérieure au diamètre des espaces de guidage de lumière, et présentent une longueur de 10 mm ou moins.

4. Ecran transmissif selon l'une quelconque des revendications précédentes, où le substrat plat comprend une matière opaque.

5. Ecran transmissif selon l'une quelconque des revendications précédentes, où le réseau de microlentilles est disposé sur la face de sortie de lumière de la plaque de guidage de lumière.

6. Rétroprojecteur comprenant une unité de projection optique (20), un miroir de guidage de lumière (30), et un écran transmissif (40) selon l'une quelconque des revendications précédentes.
